# EUROPEAN PATENT APPLICATION

(11) **EP 4 535 546 A1**
(43) Date of publication of application: **09.04.2025**
(21) Application number: 23920172.6
(22) Date of filing: 28.12.2023
(51) Int. Cl.: H01M 50/521, H01M 50/59, H01M 50/588, H01M 50/526, C08L 83/04, H01M 10/42

(54) **BUSBAR ASSEMBLY AND BATTERY PACK INCLUDING SAME**

(30) Priority: 30.01.2023 KR 20230011438
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2023/021856
(87) International publication number: WO 2024/162623

(57) **Abstract**

A busbar assembly according to an embodiment of the present disclosure includes: a busbar for guiding electrical connection inside the battery pack; a glass fiber layer that includes glass fibers and surrounds the busbar; and a fire resistant silicone layer that fills an empty space of the glass fiber layer and surrounds the busbar.

## Description

### [TECHNICAL FIELD]

### Cross Citation with Related Application(s)

This application claims the benefit of Korean Patent Application No. 10-2023-0011438 filed on January 30, 2023 with the Korean Intellectual Property Office, the disclosure of which is incorporated herein by reference in its entirety.

The present disclosure relates to a busbar assembly and a battery pack including the same, and more specifically, to a busbar assembly having an improved fire resistance and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed or thermal runaway phenomenon occurs in a battery cell, the possibility of explosion or ignition increases.

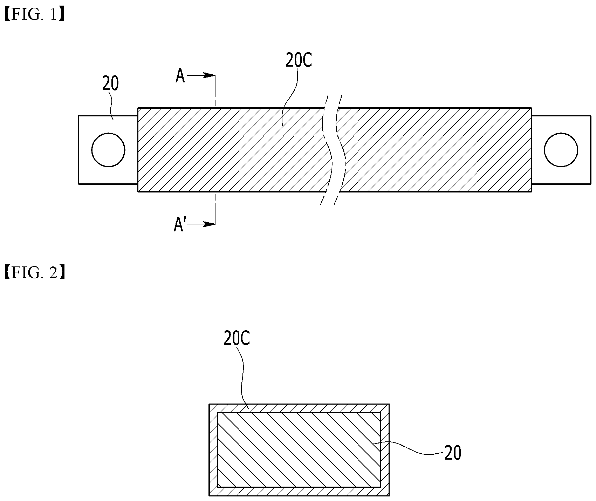

Meanwhile, a busbar connected to the battery module is provided inside the battery pack. FIG. 1 is a plan view showing a conventional busbar, and FIG. 2 is a cross-sectional view showing a cross section taken along the cutting line A-A' in FIG. 1.

Referring to FIGS. 1 and 2, a conventional busbar 20 is a rod-shaped metal member that extends along the longitudinal direction, and a through hole for connecting with a terminal busbar of a battery module may be formed at both end parts of the busbar 20. Such a busbar 20 is configured to be in charge of HV (High voltage) connection in the battery pack. The HV connection means a connection that serves as a power source to supply electric power, and the busbar 20 is configured to guide electrical connection of the battery module, and generally includes a metal material having excellent electrical conductivity. As an example, the busbar 20 may include a copper (Cu) material.

The covering member 20C can surround such a busbar 20. The covering member 20C may include a material that is electrically insulating, and for example, it may include a silicone material or an epoxy material. Since the covering member 20C surrounds the busbar 20 through which a high current flows, it is possible to prevent the busbar 20 from coming into contact with other electrical equipment or conductive members in addition to the terminal busbar of the battery module, thereby interrupting generation of short circuits.

In recent years, battery packs have been required to have equipment in which flames are not ejected to the outside of the battery pack even if a fire occurs inside the battery pack. Since the flame generated inside the battery pack has a very high temperature of approximately 1000°C, the covering member 20C surrounding the busbar 20 may melt, so that the busbar 20 may be exposed. If the exposed busbar 20 comes into contact with another electrical component or conductive member to cause a short circuit, the internal flame may further spread, and the flame may propagate to the outside of the battery pack. This could ultimately lead to an explosion of the battery pack or the vehicle equipped with the battery pack.

Therefore, there is a need to develop a technology for a busbar assembly that can maintain electrical insulation properties even if a flame occurs inside the battery pack.

### [DETAILED DESCRIPTION OF THE INVENTION]

### [Technical Problem]

It is an object of the present disclosure to provide a busbar assembly that can maintain electrical insulation properties without being melted even if a flame occurs inside the battery pack, and a battery pack including the same.

However, the technical problems to be solved by embodiments of the present disclosure are not limited to the above-mentioned problems, and can be variously expanded within the scope of the technical idea included in the present disclosure.

### [Technical Solution]

According to one embodiment of the present disclosure, there is provided a busbar assembly comprising: a busbar for guiding electrical connection inside the battery pack; a glass fiber layer that includes glass fibers and surrounds the busbar; and a fire resistant silicone layer that fills an empty space of the glass fiber layer and surrounds the busbar.

The fire resistant silicone layer may be formed through injection molding of a fire resistant silicone material onto the busbar in the state of being surrounded by the glass fiber layer.

The glass fiber layer may be a fabric made in a shape in which the glass fibers are woven.

The fire resistant silicone layer may fill a space between the woven glass fibers.

The glass fiber layer may include an inner glass fiber layer surrounding the busbar and an outer glass fiber layer surrounding the busbar on the outside of the inner glass fiber layer.

Each of the inner glass fiber layer and the outer glass fiber layer may be a fabric made in a shape in which the glass fibers are woven.

The fire resistant silicone layer may fill a space between the glass fibers woven in the inside of each of the inner glass fiber layer and the outer glass fiber layer.

The fire resistant silicone layer may fill a space between the inner glass fiber layer and the outer glass fiber layer.

The fire resistant silicone layer may include a silicone material that is ceramified at high temperature.

According to another embodiment of the present disclosure, there is provided a battery pack comprising: at least one busbar assembly as described above; battery modules; a BDU (Battery Disconnect Unit) module that controls electrical connection of the battery modules; and a BMS (Battery Management System) module that monitors and controls the operation of the battery module, wherein the at least one busbar assembly electrically connects at least one of between the battery modules, between the battery module and the BDU module, between the battery module and the BMS module, or between the BDU module and the BMS module.

### [Advantageous Effects]

According to embodiments of the present disclosure, a fire resistant silicone layer that is ceramified at high heat or flame, and a glass fiber layer that supplements the structural rigidity of the fire resistant silicon layer are provided in the busbar assembly, so that the electrical insulation properties of the busbar assembly can be maintained even under high heat or flame conditions.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a plan view showing a conventional busbar.
FIG. 2 is a cross-sectional view showing a cross section taken along the cutting line A-A' in FIG. 1.
FIG. 3 is a plan view showing a battery pack according to an embodiment of the present disclosure.
FIG. 4 is a perspective view showing one of the battery modules included in the battery pack of FIG. 3.
FIG. 5 is a partial perspective view showing a state in which the module frame and the end plate are removed in the battery module of FIG. 4.
FIG. 6 is a plan view showing a busbar and a glass fiber layer included in a busbar assembly according to an embodiment of the present disclosure.
FIG. 7 is a plan view showing a state in which a fire resistant silicon layer is provided in the busbar assembly of FIG. 6.
FIG. 8 is a cross-sectional view showing a cross section taken along the cutting line B-B' of FIG. 7.
FIG. 9 is a plan view showing a busbar and a glass fiber layer included in a busbar assembly according to another embodiment of the present disclosure.
FIG. 10 is a cross-sectional view showing a cross section taken along the cutting line C-C' of FIG. 9.
FIG. 11 is a plan view showing a state in which a fire resistant silicon layer is provided in the busbar assembly of FIG. 9.
FIG. 12 is a cross-sectional view showing a cross section taken along the cutting line D-D' of FIG. 11.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

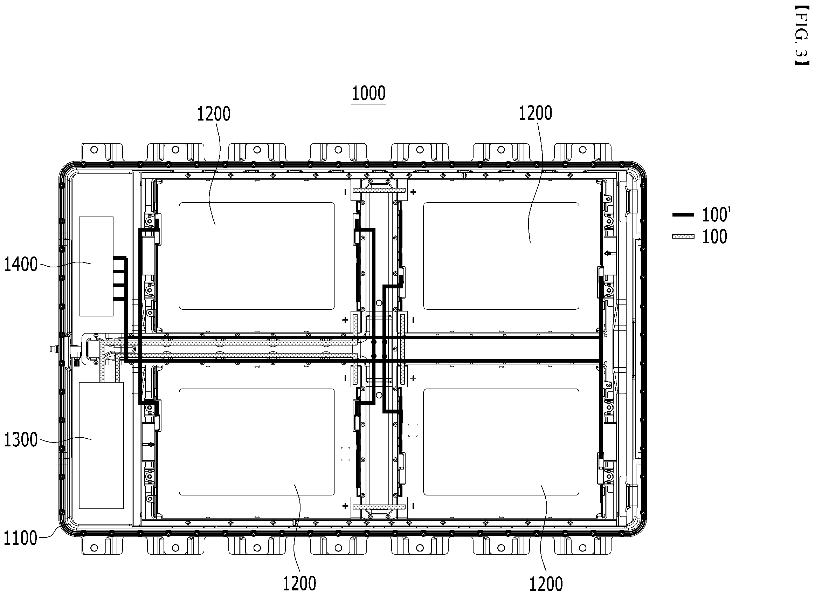

FIG. 3 is a plan view showing a battery pack according to an embodiment of the present disclosure.

Referring to FIG. 3, the battery pack 1000 according to one embodiment of the present disclosure includes a busbar assembly 100; battery modules 1200, a BDU (Battery Disconnect Unit) module 1300 for controlling electrical connection of the battery modules 1200, and a BMS (Battery Management System) module 1400 that monitors and controls the operation of the battery module 1200. At least one busbar assembly 100 according to the present embodiment electrically connects at least one of between the battery modules 1200, between the battery module 1200 and the BDU module 1300, between the battery module 1200 and the BMS module 1400, or between the BDU module 1300 and the BMS module 1400. Specifically, a plurality of battery modules 1200 may be housed in the pack frame 1100, and electrical connection between the battery modules 1200 or electrical connection between the battery module 1200 and the BDU module 1300 may be made by the busbar assembly 100. That is, the busbar assembly 100 according to the present embodiment can be in charge of HV (High voltage) connection. Here, the HV connection is a power connection that serves to supply electric power requiring high voltage, and refers to a connection between battery cells or a connection between battery modules.

Meanwhile, the BDU module 1300 is a member for controlling electrical connection of the battery module 1200, and can cut off power between the power converter and the battery module 1200. When a condition occurs in which the current exceeds the set range, the BDU module 1300 can cut off electric power to the battery pack 1000 to ensure safety of the battery pack 1000.

Meanwhile, the LV connection member 100' according to the present embodiment may be in charge of electrical connection between the battery module 1200 and the BMS module 1400. The electrical connection herein is a LV (low voltage) connection, which means a sensing connection for detecting and controlling the voltage and temperature of the battery module 1200. Specifically, sensors, and the like are arranged inside the battery module 1200, and real-time temperature information or voltage information of the battery module 1200 is transmitted to a BMS module 1400 via the LV connection member 100'. It is possible to monitor and control the real-time operating status of the battery module 1200 via the BMS module 1400. Although not specifically illustrated, an HV current sensor may be integrated into the BMS module 1400. In this case, the busbar assembly according to the present embodiment may be in charge of electrical connection between the battery module 1200 and the BMS module 1400 or between the BDU module 1300 and the BMS module 1400.

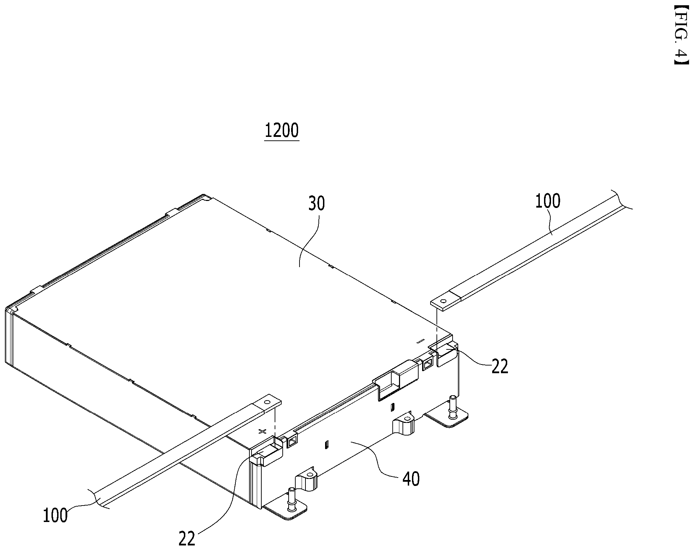

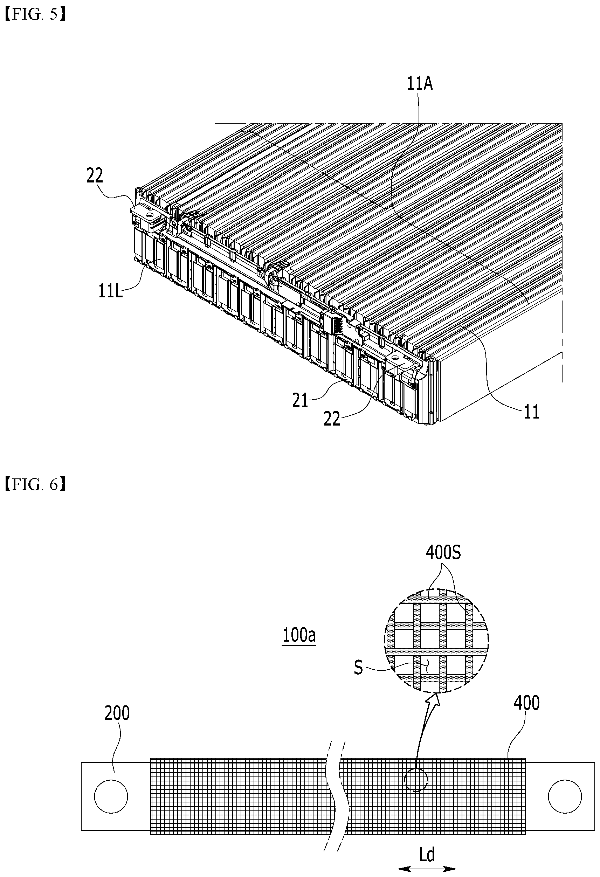

Next, the battery module 1200 according to the present embodiment will be described with reference to FIGS. 4 and 5. In this regard, the battery module 1200 described below has one exemplary structure of a battery module including a plurality of battery cells 11, and various types of battery modules including a plurality of battery cells can be applied.

FIG. 4 is a perspective view showing one of the battery modules included in the battery pack of FIG. 3. FIG. 5 is a partial perspective view showing a state in which the module frame and the end plate are removed in the battery module of FIG. 4.

Referring to FIGS. 4 and 5, the battery module 1200 according to the present embodiment may include a battery cell stack 11A in which a plurality of battery cells 11 are stacked. The battery cell stack 11A is illustrated in FIG. 5. Such a battery cell stack 11A can be housed in the module frame 30 and the end plate 40.

The battery cell 11 may be a pouch-type battery cell. Such a pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to the terminal busbar 22. A portion of the terminal busbar 22 may be exposed to the outside of the battery module 1200 as illustrated in FIG. 4. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, BDU module 1300, or BMS module 1400 via the busbar assembly 100 connected to the terminal busbar 22.

As mentioned above, the battery cells and battery modules described in FIGS. 4 and 5 are exemplary structures, and the types or forms of the battery cells and battery modules included in the battery pack to which the busbar assembly according to the present embodiment is applied are not particularly limited. That is, although a pouch-type battery cell was described as an example, a prismatic battery cell or a cylindrical battery cell can also be applied to the battery module according to an embodiment of the present disclosure. In addition, a battery module in which battery cells are housed in a module frame was described as an example, but a CTP (cell to pack) type battery module in which a plurality of battery cells are mounted on a battery pack without being housed in a module frame can also be applied as an example of the present disclosure.

Next, the busbar assembly according to an embodiment of the present disclosure will be described in detail with reference to FIGS. 6 to 8.

FIG. 6 is a plan view showing a busbar and a glass fiber layer included in a busbar assembly according to an embodiment of the present disclosure.

Referring to FIG. 6, the busbar assembly 100a according to an embodiment of the present disclosure includes a busbar 200 for guiding electrical connection within the battery pack 1000; and a glass fiber layer 400 that includes glass fibers 400W and surrounds the busbar 200.

The busbar 200 is configured to guide electrical connection, that is, HV connection, of the battery module, and may include a metal material with excellent electrical conductivity. As an example, the busbar 200 may include copper(Cu) material. The busbar 200 may be a metal rod extending along the longitudinal direction Ld.

The glass fiber layer 400 may be a fabric formed in a shape in which the glass fibers 400W are woven. As an example, a plurality of glass fibers 400W are twisted and entangled to form glass fiber strands 400S, and such glass fiber strands 400S may be woven to provide a glass fiber layer 400 in the form of a fabric. The weaving method is not particularly limited, and various weaving methods such as plain weave, twill weave, and satin weave can be applied. This glass fiber layer 400 may surround the outer peripheral surface of the busbar 200, excluding partial areas of both end parts of the busbar 200 connected to the terminal busbar 22 (see FIG. 5). Since the glass fiber layer 400 is a fabric, a space S may be formed between the glass fiber strands 400S woven within the glass fiber layer 400, and a predetermined space may also be formed between the glass fiber layer 400 and the busbar 200.

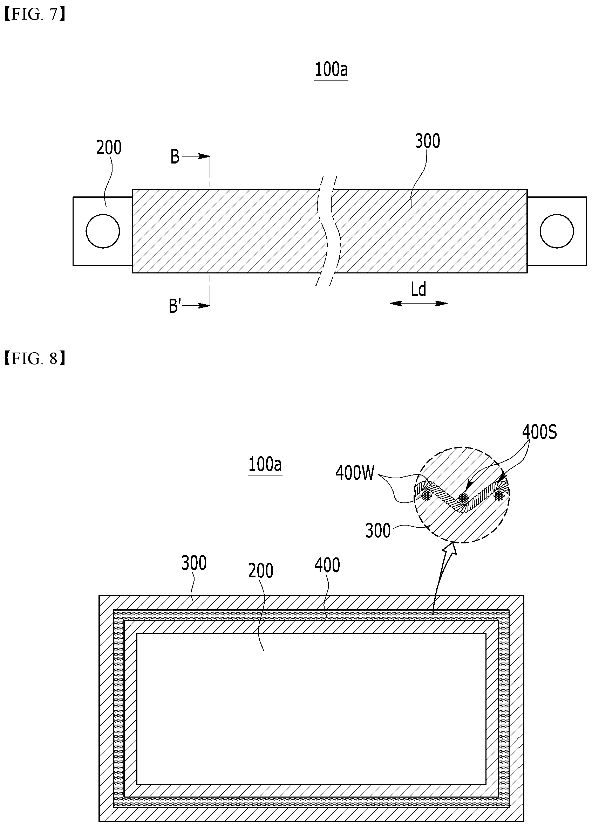

FIG. 7 is a plan view showing a state in which a fire resistant silicon layer is provided in the busbar assembly of FIG. 6. FIG. 8 is a cross-sectional view showing a cross section taken along the cutting line B-B' of FIG. 7.

Referring to FIGS. 6 to 8 together, the busbar assembly 100a according to the present embodiment further includes a fire resistant silicon layer 300 that fills an empty space S of the glass fiber layer 400 and surrounds the busbar 200. As shown in FIG. 6, the fire resistant silicon layer 300 can be provided through injection molding of a fire resistance silicone material on the outer peripheral surface of the busbar 200 while the busbar 200 is surrounded by the glass fiber layer 400. That is, the fire resistant silicon layer 300 according to the present embodiment may be formed through injection molding of the fire resistant silicone material onto the busbar 200 in the state of being surrounded by the glass fiber layer 400. Thereby, the glass fibers 400W of the glass fiber layer 400 may be located inside the fire resistant silicon layer 300. FIG. 8 illustrates the state of the woven glass fiber strand 400S, but this is an example of the present disclosure, and the shape of the woven glass fibers or the weaving method are not particularly limited, as long as the glass fiber layer 400 in the present disclosure is a fabric made in a shape in which glass fibers 400W are woven.

The fire resistant silicone layer 300 may surround the outer peripheral surface of the busbar 200 except for partial areas of both end parts of the busbar 200 that are connected to the terminal busbar 22 (see FIG. 5). The fire resistant silicone layer 300 having electrical insulation properties functions as an insulating layer that protects the busbar 200, thereby preventing the busbar 200 from coming into contact with other electrical equipment or conductive members and causing a short circuit.

The fire resistant silicone material is a material that is formed into ceramic when exposed to flame or at high heat, unlike common silicone materials that burn when exposed to flame or burn at high temperatures. The fire resistant silicone material may be a silicone material that is ceramified when the temperature exceeds a certain temperature. The fire resistant silicone material may include silicone polymer and silica. The applied silicone polymer may be a polysiloxane-based compound having a vinyl group as a functional group, and corresponds to a base material for a fire resistant silicone material. The silica may be fumed silica, which is a reinforcing filler included in the silicone polymer. A high-purity silicone chloride (SiCl₄) compound can be produced using metallic silicone as a main raw material through reaction with hydrochloric acid and purification process, and this can be reacted with hydrogen and oxygen in a high temperature flame to obtain fumed silica. Further, the fire resistant silicone may contain platinum Pt as a catalyst.

When the fire resistant silicone material is exposed to flame or high heat, silica (SiO₂) is crosslinked together with decomposition of the silicone polymer to form a ceramic material. The fire resistant silicone layer 300 according to the present embodiment does not burn or melt, but can be ceramified and maintain electrical insulation properties, even if exposed to flame or placed in a high-temperature environment.

As mentioned above, a space S may be formed between the intersecting glass fiber strands 400S in the glass fiber layer 400, which is a fabric, and a predetermined space may also be formed between the glass fiber layer 400 and the busbar 200. Further, spaces may be formed between the glass fibers 400W which are twisted and entangled within the glass fiber strands 400S themselves. During the process of injection molding the fire resistant silicon layer 300, the fire resistant silicone material may permeate into these spaces. The fire resistant silicon layer 300 can fill the space between the woven glass fibers 400W.

When the fire resistant silicon layer 300 is ceramified in a flame or high-temperature environment, the electrical insulation properties of the fire resistant silicon layer 300 can be maintained, but the strength of the fire resistant silicon layer 300 becomes weaker, and it is more likely to be cracked due to external force. **In** the present embodiment, it has been designed such that the fire resistant silicon layer 300 fills the space between the woven glass fibers, and the glass fiber layer 400 is located inside the fire resistant silicon layer 300. Thereby, it is possible to supplement the structural rigidity of the fire resistant silicon layer 300, and even if the fire resistant silicon layer 300 is ceramified, it is attempted to be prevented from being cracked by external force. **In** particular, the fire resistant silicone material permeates in the space between the glass fiber strands 400S within the glass fiber layer 400 , which is a fabric, or between the glass fibers 400W that are twisted inside the glass fiber strand 400S itself, thereby capable of realizing enhanced rigidity of the fire resistant silicon layer 300 and strong bonding strength between the fire resistant silicon layer 300 and the glass fiber layer 400. Ultimately, the busbar assembly 100a according to the present embodiment has improved fire resistance, and can maintain electrical insulation properties even in a flame or high-temperature environment.

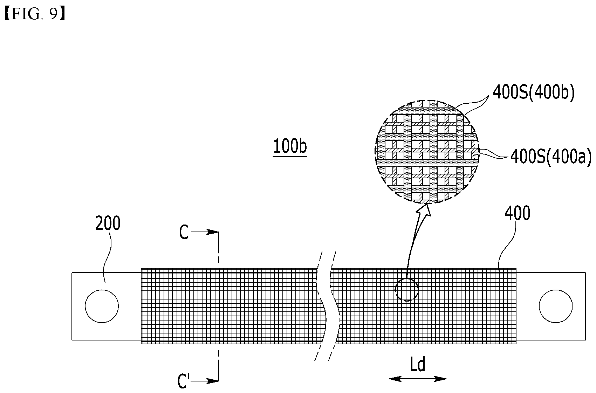

Next, a busbar assembly according to another embodiment of the present disclosure will be described in detail with reference to FIGS. 9 to 12.

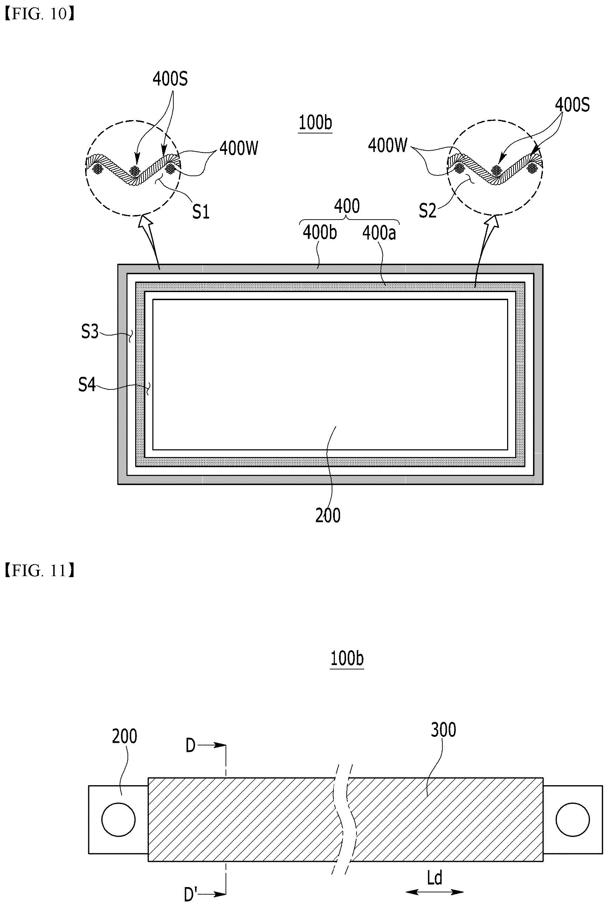

FIG. 9 is a plan view showing a busbar and a glass fiber layer included in a busbar assembly according to another embodiment of the present disclosure. FIG. 10 is a cross-sectional view showing a cross section taken along the cutting line C-C' of FIG. 9.

Referring to FIGS. 9 and 10, the busbar assembly 100b according to another embodiment of the present disclosure may include a busbar 200 and a glass fiber layer 400 that includes glass fibers 400W and surrounds the busbar 200. At this time, the glass fiber layer 400 may include an inner glass fiber layer 400a surrounding the busbar 200 and an outer glass fiber layer 400b surrounding the busbar 200 on the outside of the inner glass fiber layer 400a. That is, the glass fiber layer 400 according to the present embodiment may have a multilayer structure of an inner glass fiber layer 400a and an outer glass fiber layer 400b. Although not specifically illustrated, the glass fiber layer according to another embodiment of the present disclosure may have a multilayer structure of three or more layers.

Each of the inner glass fiber layer 400a and the outer glass fiber layer 400b may be a fabric formed in a shape in which glass fibers 400W are woven. More specifically, a plurality of glass fibers 400W are twisted and entangled to form glass fiber strands 400S, wherein such glass fiber strands 400S may be woven to provide an inner glass fiber layer 400a and an outer glass fiber layer 400b in the form of a fabric. Within the inner glass fiber layer 400a, which is a fabric, a space S1 may be formed between the intersecting glass fiber strands 400S, and similarly, within the outer glass fiber layer 400b, which is a fabric, a space S2 may be formed between the intersecting glass fiber strands 400S. In addition, a predetermined space S3 may be formed between the inner glass fiber layer 400a and the outer glass fiber layer 400b, and a predetermined space S4 may also be formed between the inner glass fiber layer 400a and the busbar 200. This is due to the fact that each of the inner glass fiber layer 400a and the outer glass fiber layer 400b is a fabric. In FIG. 8, such spaces are exaggerated for convenience of explanation.

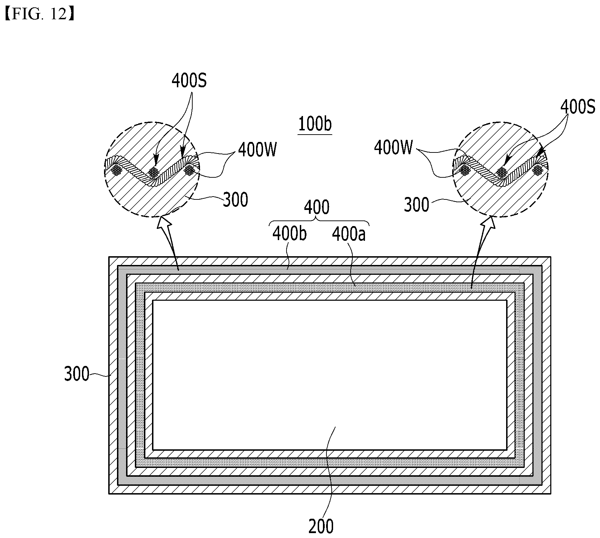

FIG. 11 is a plan view showing a state in which a fire resistant silicon layer is provided in the busbar assembly of FIG. 9. FIG. 12 is a cross-sectional view showing a cross section taken along the cutting line D-D' of FIG. 11.

Referring to FIGS. 9 to 12 together, the busbar assembly 100b according to the present embodiment may further includes a fire resistant silicon layer 300 that fills empty spaces of the inner glass fiber layer 400a and the outer glass fiber layer 400b and surrounds the busbar 200. That is, the fire resistant silicone material can be injection-molded on the busbar 200 surrounded by the inner glass fiber layer 400a and the outer glass fiber layer 400b, thereby producing the fire resistant silicon layer 300. Thereby, the glass fibers 400W of the inner glass fiber layer 400a and the glass fibers 400W of the outer glass fiber layer 400b may be located inside the fire resistant silicon layer 300.

In the process of injection-molding the fire resistant silicon layer 300, the fire resistant silicone material may permeate into the internal spaces S1 and S2 of each of the inner glass fiber layer 400a and the outer glass fiber layer 400b, and the fire resistant silicone material may also permeate into the space S3 between the inner glass fiber layer 400a and the outer glass fiber layer 400b. That is, the fire resistant silicon layer 300 can fill the spaces S1 and S2 between the glass fiber strands 400S woven in the inside of each of the inner glass fiber layer 400a and the outer glass fiber layer 400b, and can also fill the space S3 between the inner glass fiber layer 400a and the outer glass fiber layer 400b, and may penetrate between the glass fibers 400W that are twisted within the glass fiber strands 400S themselves.

The busbar assembly 100b according to the present embodiment is designed so that the inner glass fiber layer 400a and the outer glass fiber layer 400b are located inside the fire resistant silicon layer 300. Therefore, similar to the busbar assembly 100a previously described in FIGS. 6 to 8, the structural rigidity of the fire resistant silicon layer 300 can be supplemented, and even if the fire resistant silicon layer 300 is ceramifized, it can be prevented from being cracked by external force. Ultimately, the busbar assembly 100b according to the present embodiment has improved fire resistance, and can maintain electrical insulation properties even in a flame or high-temperature environment.

In particular, the inner glass fiber layer 400a reinforces the structural rigidity of the fire resistant silicon layer 300 itself, and protects internal components such as the busbar 200 even if the outer glass fiber layer 400b or the outer fire resistant silicon layer 300 is cracked. Meanwhile, in addition to structural rigidity, the outer glass fiber layer 400b can function to prevent the inner fire resistant silicon layer 300 and the inner glass fiber layer 400a from being directly exposed to flame or the like. In addition, the outer glass fiber layer 400b can protect the inner busbar 200 from physical external forces and thus prevent short circuits from occurring.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system) module, a BDU(battery disconnect unit) module, and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100, 100a, 100b: busbar assembly
200: busbar
300: fire resistant silicon layer
400: glass fiber layer
400a: inner glass fiber layer
400b: outer glass fiber layer
400S: glass fiber strand
1000: battery pack
1100: pack frame
1200: battery module
1300: BDU module
1400: BMS module

## Claims

1. A busbar assembly comprising:
a busbar for guiding electrical connection inside the battery pack;
a glass fiber layer that includes glass fibers and surrounds the busbar; and
a fire resistant silicone layer that fills an empty space of the glass fiber layer and surrounds the busbar.

2. The busbar assembly as claimed in claim 1, wherein:
the fire resistant silicone layer is formed through injection molding of a fire resistant silicone material onto the busbar in the state of being surrounded by the glass fiber layer.

3. The busbar assembly as claimed in claim 1, wherein:
the glass fiber layer is a fabric made in a shape in which the glass fibers are woven.

4. The busbar assembly as claimed in claim 3, wherein:
the fire resistant silicone layer fills a space between the woven glass fibers.

5. The busbar assembly as claimed in claim 1, wherein:
the glass fiber layer includes an inner glass fiber layer surrounding the busbar and an outer glass fiber layer surrounding the busbar on the outside of the inner glass fiber layer.

6. The busbar assembly as claimed in claim 5, wherein:
each of the inner glass fiber layer and the outer glass fiber layer is a fabric made in a shape in which the glass fibers are woven.

7. The busbar assembly as claimed in claim 6, wherein:
the fire resistant silicone layer fills a space between the glass fibers woven in the inside of each of the inner glass fiber layer and the outer glass fiber layer.

8. The busbar assembly as claimed in claim 6, wherein:
the fire resistant silicone layer fills a space between the inner glass fiber layer and the outer glass fiber layer.

9. The busbar assembly as claimed in claim 1, wherein:
the fire resistant silicone layer includes a silicone material that is ceramified at high temperature.

10. A battery pack comprising:
at least one busbar assembly as claimed in claim 1;
battery modules;
a BDU (Battery Disconnect Unit) module that controls electrical connection of the battery modules; and
a BMS (Battery Management System) module that monitors and controls the operation of the battery module,
wherein the at least one busbar assembly electrically connects at least one of between the battery modules, between the battery module and the BDU module, between the battery module and the BMS module, or between the BDU module and the BMS module.
